(19) **Europäisches Patentamt / European Patent Office / Office européen des brevets**

(11) **EP 4 141 386 A1**

(12) # EUROPEAN PATENT APPLICATION

(43) Date of publication:
**01.03.2023 Bulletin 2023/09**

(21) Application number: **22166939.3**

(22) Date of filing: **06.04.2022**

(51) International Patent Classification (IPC):
**G01C 21/00** (2006.01)

(52) Cooperative Patent Classification (CPC):
**G01C 21/3815**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2021 CN 202111011441**

(71) Applicant: **BEIJING BAIDU NETCOM SCIENCE AND TECHNOLOGY CO. LTD.**
**100085 Beijing (CN)**

(72) Inventors:
• **LI, Meng**
  **Beijing, 100085 (CN)**
• **ZHAO, Hui**
  **Beijing, 100085 (CN)**
• **XIA, Deguo**
  **Beijing, 100085 (CN)**
• **JIANG, Bing**
  **Beijing, 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **ROAD DATA MONITORING METHOD AND APPARATUS, ELECTRONIC DEVICE AND STORAGE MEDIUM**

(57) The present disclosure provides a method and an apparatus for monitoring road data, an electronic device and a storage medium, and relates to the field of intelligent transportation. A specific implementation solution involves: acquiring a feature expression of a road; predicting, according to the feature expression of the road and a pre-trained change prediction model, a probability that road data of the road will change; and collecting the road data of the road based on the probability that the road data will change. The present disclosure provides an efficient road data monitoring solution, which can effectively ensure the accuracy of road data.

```
S101
Acquire a feature expression of a road

S102
Predict, according to the feature expression of the road
and a pre-trained change prediction model, a probability
that road data of the road will change

S103
Collect the road data of the road based on the probability
that the road data will change
```

FIG.1

# Description

## Field of the Disclosure

The present disclosure relates to the field of computer technologies, specifically to the field of intelligent transportation, and in particular, to a method and an apparatus for monitoring road data, an electronic device and a storage medium.

## Background of the Disclosure

In the real world, road data is not static, and some changes may occur at some special time points. Construction, for example, is a significant contributor to changes in the road data. The efficiency of collection and update of the road data directly affects user experience of navigation users of electronic maps.

In general, construction may have a significant impact on road accessibility. For example, it may be embodied in changes in traffic flow on the road, increased obstacles on the road and so on. In practical applications, events such as road blocking and opening may be found in time by trajectories, images and other change mining means, which has a significant positive impact on navigation route planning and other services.

## Summary of the Disclosure

The present disclosure provides a method and an apparatus for monitoring road data, an electronic device and a storage medium.

According to one aspect of the present disclosure, a method for monitoring road data is provided, including: acquiring a feature expression of a road;

predicting, according to the feature expression of the road and a pre-trained change prediction model, a probability that road data of the road will change; and collecting the road data of the road based on the probability that the road data will change.

According to another aspect of the present disclosure, an apparatus for monitoring road data is provided, wherein the apparatus includes:

an acquisition module configured to acquire a feature expression of a road;
a prediction module configured to predict, according to the feature expression of the road and a pre-trained change prediction model, a probability that road data of the road will change; and
a collection module configured to collect the road data of the road based on the probability that the road data will change.

According to yet another aspect of the present disclosure, an electronic device is provided, including:

at least one processor; and
a memory in communication connection with the at least one processor; wherein
the memory stores instructions executable by the at least one processor, and the instructions are executed by the at least one processor to enable the at least one processor to perform the methods as described in the above aspects and any possible implementation.

According to still another aspect of the present disclosure, a non-transitory computer-readable storage medium storing computer instructions is provided, wherein the computer instructions are configured to cause a computer to perform the methods as described in the above aspects and any possible implementation.

According to a further aspect of the present disclosure, a computer program product is provided, including a computer program, wherein, when the computer program is executed by a processor, the methods as described in the above aspects and any possible implementation are performed.

According to technologies of the present disclosure, an efficient road data monitoring solution is provided, which can effectively ensure the accuracy of road data.

It should be understood that the content described in this part is neither intended to identify key or significant features of the embodiments of the present disclosure, nor intended to limit the scope of the present disclosure. Other features of the present disclosure will be made easier to understand through the following description.

## Brief Description of Drawings

The accompanying drawings are intended to provide a better understanding of the solutions and do not constitute a limitation on the present disclosure. In the drawings,

FIG. 1 is a schematic diagram according to a first embodiment of the present disclosure;
FIG. 2 is a schematic diagram according to a second embodiment of the present disclosure;
FIG. 3 is a schematic diagram according to a third embodiment of the present disclosure;
FIG. 4 is a schematic diagram according to a fourth embodiment of the present disclosure; and
FIG. 5 is a block diagram of an electronic device configured to perform a method for monitoring road data according to an embodiment of the present disclosure.

## Detailed Description of Preferred Embodiments

Exemplary embodiments of the present disclosure are illustrated below with reference to the accompanying drawings, which include various details of the present disclosure to facilitate understanding and should be considered only as exemplary. Therefore, those of ordinary skill in the art should be aware that various changes and modifications can be made to the embodiments described herein without departing from the scope and spirit of the present disclosure. Similarly, for clarity and simplicity, descriptions of well-known functions and structures are omitted in the following description.

Obviously, the embodiments described are some rather than all of the embodiments of the present disclosure. All other embodiments obtained by those of ordinary skill in the art based on the embodiments in the present disclosure without creative efforts fall within the protection scope of the present disclosure.

It is to be noted that the terminal device involved in the embodiments of the present disclosure may include, but is not limited to, smart devices such as mobile phones, Personal Digital Assistants (PDAs), wireless handheld devices, and Tablet Computers. The display device may include, but is not limited to, devices with a display function such as personal computers and televisions.

In addition, the term "and/or" herein is merely an association relationship describing associated objects, indicating that three relationships may exist. For example, A and/or B indicates that there are three cases of A alone, A and B together, and B alone. Besides, the character "/" herein generally means that associated objects before and after it are in an "or" relationship.

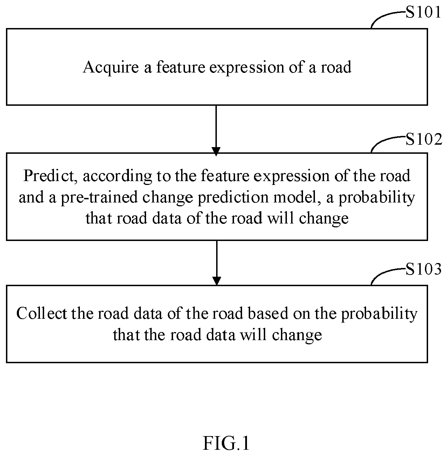

FIG. 1 is a schematic diagram according to a first embodiment of the present disclosure. As shown in FIG. 1, this embodiment provides a method for monitoring road data, which may specifically include the following steps.

In S 101, a feature expression of a road is acquired.

In S102, a probability that road data of the road will change is predicted according to the feature expression of the road and a pre-trained change prediction model.

In S103, the road data of the road is collected based on the probability that the road data will change.

The method for monitoring road data in this embodiment is performed by an apparatus for monitoring road data. The apparatus may be an electronic entity or a software-integrated application. The apparatus for monitoring road data may be arranged in an electronic map, configured to monitor road data to collect road data of a road, ensuring the accuracy of the road data.

In this embodiment, a feature expression of a road is acquired first. The feature expression of the road may be identified by a plurality of pieces of feature information of the road, which can accurately and comprehensively identify the road. In this embodiment, the pre-trained change prediction model is configured to predict, based on the feature expression of the road, a probability that road data of the road will change. In use, the feature expression of the road is inputted into the change prediction model. The change prediction model may predict and output, based on the inputted feature expression of the road, a probability that road data of the road will change. The higher the probability is, the more likely the road data of the road will change; otherwise, the smaller the probability is, the less likely the road data of the road will change. Finally, the road data of the road is collected based on the probability that the road data will change, so as to ensure real-time performance and accuracy of the road data.

The change prediction model in this embodiment is pre-trained. Prior to the training, a plurality of pieces of training data may be pre-collected. Each piece of the training data includes a feature expression of a trained road and an identifier indicating whether road data of the trained road will change. If yes, the identifier is 1. If no, the identifier is 0. In the training, the training data is inputted into the change prediction model. The change prediction model predicts, based on the feature expression of the trained road in the training data, whether the road data of the trained road will change, and then parameters of the change prediction model are adjusted based on a predicted result and a real result indicating whether the trained road will change, so that the predicted result is consistent with the real result. The change prediction model is constantly trained by using a plurality of pieces of training data, so that the predicted results are consistent with the real results. After the training ends, the parameters of the change prediction model are determined, and then the change prediction model is determined.

According to the method for monitoring road data in this embodiment, a feature expression of a road is acquired; a probability that road data of the road will change is predicted according to the feature expression of the road and a pre-trained change prediction model; and the road data of the road is collected based on the probability that the road data will change, so that the road data can be efficiently monitored, the accuracy of the road data can be effectively ensured, and then travel experience of navigation users can be effectively improved.

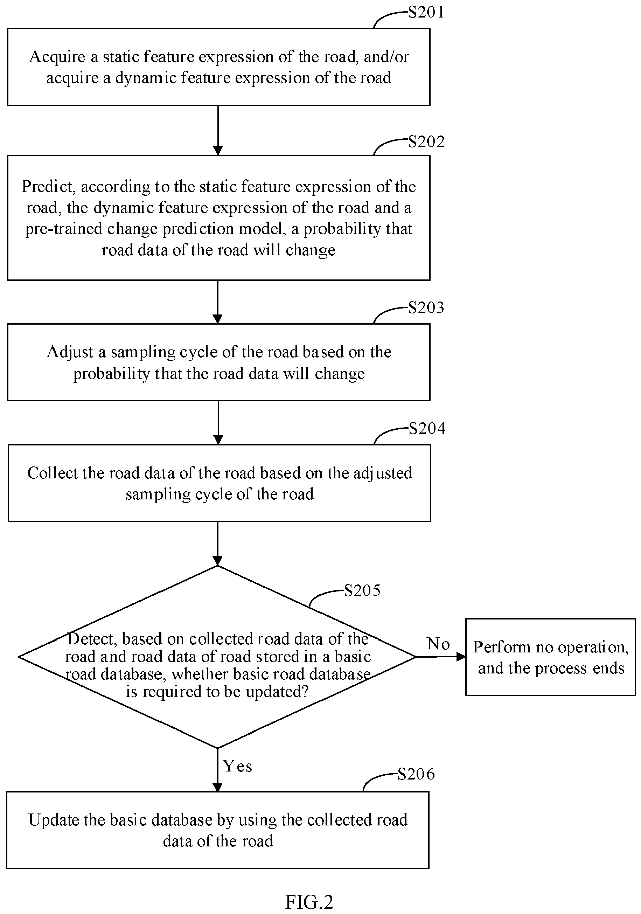

FIG. 2 is a schematic diagram according to a second embodiment of the present disclosure. The method for monitoring road data according to this embodiment further describes the technical solution of the present application in more detail on the basis of the technical solution of the embodiment shown in FIG. 1. As shown in FIG. 2, the method for monitoring road data according to this embodiment may specifically include the following steps.

In S201, a static feature expression of the road and a dynamic feature expression of the road are acquired.

Step S102 is an implementation of step S101 of acquiring a feature expression of a road in the embodiment shown in FIG. 1. In practical applications, acquiring a feature expression of a road may also mean acquiring only a dynamic feature expression of the road or acquiring only a static feature expression of the road.

Since construction is an important contributor to road data changes in the real world, one of the most important application scenarios of the method for monitoring road data in this embodiment is to monitor road data of a road after construction, so as to update the road data in time and ensure the accuracy of the road data. The road data in this embodiment mainly refers to guidance data of the road, such as traffic light information on the road, electronic eye information on the road, lane information on the road, speed limit information on the road and the traffic restriction information on the road. Such data may also be called guidance factor information of the road. After construction of the road, guidance data of the road is very likely to change, so, especially after the completion of the construction, there is a need to monitor the guidance data of the road in time.

Optionally, the step of acquiring a static feature expression of the road may include: acquiring at least one of a construction type of the road, a construction duration of the road, a construction-affecting range of the road and basic attributes of the road. The construction type of the road may include N types such as new road, road maintenance and occupying-road construction, which may be mapped to a 0-1 encoded N-dimensional vector (One-Hot encoding) in use. Each position on the N-dimensional vector identifies a type. Different construction types may identify probabilities of updating road data to some extent. For example, for the new road, the road data may be definitely updated. For the road maintenance, the road data may also be updated. The occupying-road construction may also lead to update of the road data to some extent. The construction duration of the road may be identified by days. The longer the construction duration, the more likely the road is to be updated. The construction-affecting range of the road may represent a change in the road data. For example, the greater the construction-affecting range of the road, the greater the probability of the change in the road data. In this embodiment, the construction-affecting range of the road may be identified by an area affected by construction, a number of road lanes affected by construction, a length of the road affected by construction, etc. The area affected by construction may be measured in square meters. The basic attributes of the road may be identified by at least one feature of a road grade, a road width, a total number of road lanes, and whether the road is at an intersection. The road grade may include national road, provincial road, expressways, etc. In practical applications, other static features of the road may also be acquired, which are not described one by one herein.

In the above manner, at least one static feature of the acquired construction type of the road, construction duration of the road, construction-affecting range of the road and basic attributes of the road is expressed in a form of a vector, and then is spliced together to form the static feature expression of the road. In practical applications, other static features of the road may also be acquired, which are not described one by one herein. The more static features are acquired, the more accurate the static features of the road are expressed.

Optionally, the step of acquiring a dynamic feature expression of the road may include: acquiring at least one of a construction end duration of the road, known guidance data of the road, trajectory features of the road and real-time guidance data of the road.

The construction end duration of the road refers to a duration from an end time of the construction of the road to a current time. For example, the duration may be expressed in days, hours or other time units.

All basic attribute information of the road is stored in a basic database of the road, including known guidance data of the road, which may include at least one of traffic light information, electronic eye information, lane information, speed limit information and traffic limit information of the road. The known guidance data of the road in this embodiment may be identified by a multi-dimensional vector. Each dimension represents a piece of guidance data. In the presence of the corresponding guidance data, a corresponding position in the vector is denoted as 1, while in the absence of the corresponding guidance data, the corresponding position is denoted as 0. The known guidance data represented by the multi-dimensional vector may identify the integrity of the guidance data. An occurrence probability of the guidance data of the road is highly correlated with the basic attributes of the road. The lower the integrity of the guidance data of the road is, the more likely subsequent changes may occur. The vector identify the guidance data of the road may also be expanded into more dimensions as required, so as to express more detailed guidance data of the road, such as a speed limit value and a traffic restriction type, which are not described one by one herein.

In this embodiment, the trajectory features of the road may specifically refer to trajectory features of the road in a time window. For example, the time window may be one day.

Optionally, the trajectory features of the road in this embodiment may include at least one of the following features.

(1) A trajectory turning feature may include trajectory quantities of left turn, right turn and straight go in the time window. The trajectory turning feature is configured to monitor changes in lane information.
(2) A trajectory residence feature may monitor traffic light changes on the road, that is, detect that traffic lights do not increase or decrease.
(3) A trajectory speed feature may include at least one of a speed mean and a speed mode. The trajectory speed feature is configured to monitor speed limit changes. An average speed refers to an average speed of vehicles passing the road in the time window. For the speed mode, the average speed of each vehicle in the time window may be taken first, and then the maximum average speed of the vehicle is taken as the speed mode.

(4) A trajectory linkage feature may identify vehicle trajectory accessibility of the road and its associated roads in the time window, and is configured to monitor changes in traffic restrictions. For example, in a specified time window, vehicles passing through an intersection are not allowed to turn around or turn left, and these traffic restrictions may be identified by the track linkage feature. The associated roads include a road that the vehicle enters from a current road and a road that the vehicle is on before entering the current road. In practical applications, a road has two ends. If each end has a crossroad, features such as turn left from Road 1 into the current road, turn right from Road 2 into the current road, go straight from Road 3 into the current road, turn around from Road 4 into the current road, turn left from the current road into Road 4, turn right from the current road into Road 5, go straight from the current road into Road 6, and turn around from the current road into Road 8 may be set. The trajectory linkage feature may also be identified by using a multi-dimensional vector. For example, a number of trajectories of the vehicle with the above features may be counted in the time window. In order to eliminate errors, when the number of trajectories is greater than a preset number threshold, it may be considered that a corresponding trajectory linkage feature exists at the corresponding position. The preset number threshold may be 3, 5 or other values to prevent the influence of illegal trajectories of some illegal vehicles on a correct representation of the trajectory linkage feature. For example, when the number of trajectories on a feature is greater than the preset number threshold, the feature of the dimension in the vector is denoted as 1, and otherwise is denoted as 0. If the number of trajectories going straight from Road 3 into the current road in the time window is 100, the feature of going straight from Road 3 into the current road in the vector is denoted as 1. Similarly, if there are many roads associated with the current road, the dimension of the corresponding vector may also be extended.

The real-time guidance data of the road in this embodiment is different from the known guidance data of the road described above in that the known guidance data of the road is obtained based on the basic database of the road, the basic database being a database for providing navigation services. The real-time guidance data of the road is obtained based on a real-time image detection result. For example, a plurality of images of the road may be collected, and then guidance data of the road in the collected images may be recognized by a pre-trained image detection model as the real-time guidance data of the road. The image detection model may be, but is not limited to, neural network models such as Yolov3 and Faster-RCNN

In the above manner, at least one dynamic feature of the acquired construction end duration of the road, known guidance data of the road, trajectory features of the road and real-time guidance data of the road is expressed in a form of a vector, and then is spliced together to form the dynamic feature expression of the road. In practical applications, other dynamic features of the road may also be acquired, which are not described one by one herein. The more dynamic features are acquired, the more accurate the dynamic features of the road are expressed.

In S202, a probability that road data of the road will change is predicted according to the static feature expression of the road, the dynamic feature expression of the road and a pre-trained change prediction model.

Specifically, the static feature expression and the dynamic feature expression of the road are spliced together to form a vector feature expression, and then the vector feature expression is inputted into the change prediction model. The change prediction model may predict and output, based on the inputted information, a probability that road data of the road will change.

In S203, a sampling cycle of the road is adjusted based on the probability that the road data will change.

In S204, the road data of the road is collected based on the adjusted sampling cycle of the road.

Steps S203 to S204 are an implementation of step S103 of in the embodiment shown in FIG. 1. The probability is a value between 0 and 1. The closer the probability is to 1, the more likely the road data may change, while the closer the probability is to 0, the less likely the road data may change.

In the implementation, in order to ensure the accuracy of the road data, the sampling cycle of the road may be adjusted to be shorter if the probability that the road data will change is higher, while the sampling cycle of the road may be appropriately adjusted to be longer if the probability that the road data will change is lower. Finally, the road data of the road is collected based on the adjusted sampling cycle of the road.

For example, after the $N^{th}$ collection, a collection cycle $T_N$ is dynamically adjusted according to the probability y that the road data will change. Next collection cycle $T_{N+1}$ may be expressed as:

$$T_{N+1} = T_N * (1 - y)$$

That is, the greater the probability that the road data will change, the shorter the collection cycle.

That is, the road detection method according to this embodiment may be applied to between two collection of road data. The collection cycle of the road data may be adjusted in a timely manner based on changes in the road data, and then the road data may be collected in time based on the adjusted sampling cycle of the road.

Optionally, in step S103, the road data of the road may also be collected, in other manners, based on the probability that the road data will change. For example, if it is detected that the probability that the road data will change is greater than a preset probability threshold, the road data is collected immediately. If the probability that the road data ranges is less than the preset probability threshold, the road data of the road is collected according to the sampling cycle. Alternatively, in practical applications, step S103 may also be implemented in other manners, which are not described in detail one by one herein.

In S205, it is detected, based on the collected road data of the road and road data of the road stored in a basic road database, whether the basic road database is required to be updated; if yes, step S206 is performed; otherwise, no operation is performed, and the process ends.

In S206, the basic database is updated by using the collected road data of the road.

Specifically, the collected road data of the road may be marked as a set $A_n$, the road data of the road stored in the basic road database is marked as a set $A_{n+1}$, a difference between the set $A_n$ and the set $A_{n+1}$ is calculated, which may be expressed as: $\Delta A = A_{n+1} - A_n$; if a difference result $\Delta A$ is not null, it is denoted as a potential change point and the road base database is considered to be updated. In this case, the collected road data of the road may be directly updated to the basic database. That is, the road data of the road previously stored in the basic database is replaced with the collected road data of the road. At the same time, in order to ensure the update of all the road information and the accuracy of the data in the basic database, report information may also be sent when it is detected that the basic database is required to be updated, so as to automatically flow to a manual operation line for an operator to verify changes and make data, and update the road data.

According to the method for monitoring road data in this embodiment, static features and dynamic features of a road are acquired by use of the above technical solution, which can accurately and comprehensively identify a feature expression of the road; then, a probability that road data of the road will change may be accurately predicted based on the feature expression of the road and by using a change prediction model; subsequently, a sampling cycle of the road may be accurately adjusted further based on the probability that the road data of the road will change; finally, the road data of the road may be accurately collected based on the adjusted sampling cycle of the road. Therefore, by use of the technical solution of this embodiment, the road data can be effectively and efficiently monitored, the accuracy of the road data can be ensured, and then more efficient navigation services can be provided based on the road data, thereby effectively improving travel experience of users.

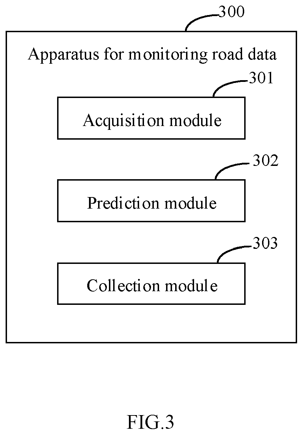

FIG. 3 is a schematic diagram according to a third embodiment of the present disclosure. As shown in FIG. 3, this embodiment provides an apparatus 300 for monitoring road data, including:

an acquisition module 301 configured to acquire a feature expression of a road;
a prediction module 302 configured to predict, according to the feature expression of the road and a pre-trained change prediction model, a probability that road data of the road will change; and
a collection module 303 configured to collect the road data of the road based on the probability that the road data will change.

The implementation principle and technical effect of implementing road data monitoring by the apparatus 300 for monitoring road data in this embodiment by using the above modules are the same as those in the related method embodiment, details of which may be obtained with reference to the description of the related method embodiment, and are not described herein.

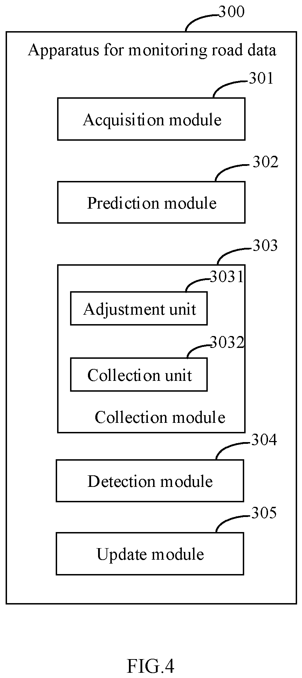

FIG. 4 is a schematic diagram according to a fourth embodiment of the present disclosure. As shown in FIG. 4, the apparatus 300 for monitoring road data according to this embodiment further describes the technical solution of the present application in more detail on the basis of the technical solution of the embodiment shown in FIG. 3.

In the apparatus 300 for monitoring road data according to this embodiment, the acquisition module 301 is configured to:

acquire a static feature expression of the road, and/or acquire a dynamic feature expression of the road.

Further optionally, the acquisition module is configured to:

acquire at least one of a construction type of the road, a construction duration of the road, a construction-affecting range of the road and basic attributes of the road.

Further optionally, the acquisition module is configured to:

acquire at least one of a construction end duration of the road, known guidance data of the road, trajectory features of the road and real-time guidance data of the road.

Further optionally, as shown in FIG. 4, in the apparatus 300 for monitoring road data according to this embodiment, the collection module 303 includes:

an adjustment unit 3031 configured to adjust a sampling cycle of the road based on the probability that the road data of the road will change; and
a collection unit 3032 configured to collect the road data of the road based on the adjusted sampling cycle of the road.

Further optionally, as shown in FIG. 4, the apparatus 300 for monitoring road data according to this embodiment further includes:

a detection module 304 configured to detect, based on the collected road data of the road and road data of the road stored in a basic road database, whether the basic road database is required to be updated;

and
an update module 305 configured to update the basic road database by using the road data of the road if yes.

The implementation principle and technical effect of implementing road data monitoring by the apparatus 300 for monitoring road data in this embodiment by using the above modules are the same as those in the related method embodiment, details of which may be obtained with reference to the description of the related method embodiment, and are not described herein.

Acquisition, storage and application of users' personal information involved in the technical solutions of the present disclosure, such as users' physiological parameters and users' identity information, comply with relevant laws and regulations, and do not violate public order and moral.

According to embodiments of the present disclosure, the present disclosure further provides an electronic device, a readable storage medium and a computer program product.

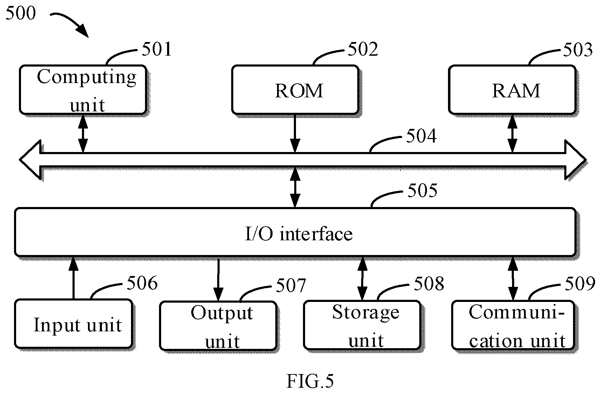

FIG. 5 is a schematic block diagram of an exemplary electronic device 500 configured to implement embodiments of the present disclosure. The electronic device is intended to represent various forms of digital computers, such as laptops, desktops, workbenches, PDAs, servers, blade servers, mainframe computers and other suitable computing devices. The electronic device may further represent various forms of mobile devices, such as PDAs, cellular phones, smart phones, wearable devices and other similar computing devices. The components, their connections and relationships, and their functions shown herein are examples only, and are not intended to limit the implementation of the present disclosure as described and/or required herein.

As shown in FIG. 5, the device 500 includes a computing unit 501, which may perform various suitable actions and processing according to a computer program stored in a read-only memory (ROM) 502 or a computer program loaded from a storage unit 508 into a random access memory (RAM) 503. The RAM 503 may also store various programs and data required to operate the device 500. The computing unit 501, the ROM 502 and the RAM 503 are connected to one another by a bus 504. An input/output (I/O) interface 505 is also connected to the bus 504.

A plurality of components in the device 500 are connected to the I/O interface 505, including an input unit 506, such as a keyboard and a mouse; an output unit 507, such as various displays and speakers; a storage unit 508, such as disks and discs; and a communication unit 509, such as a network card, a modem and a wireless communication transceiver. The communication unit 509 allows the device 500 to exchange information/data with other devices over computer networks such as the Internet and/or various telecommunications networks.

The computing unit 501 may be a variety of general-purpose and/or special-purpose processing components with processing and computing capabilities. Some examples of the computing unit 501 include, but are not limited to, a central processing unit (CPU), a graphics processing unit (GPU), various artificial intelligence (AI) computing chips, various computing units that run machine learning model algorithms, a digital signal processor (DSP), and any appropriate processor, controller or microcontroller, etc. The computing unit 501 performs the methods and processing described above, such as the method for monitoring road data. For example, in some embodiments, the method for monitoring road data may be implemented as a computer software program that is tangibly embodied in a machine-readable medium, such as the storage unit 508. In some embodiments, part or all of a computer program may be loaded and/or installed on the device 500 via the ROM 502 and/or the communication unit 509. One or more steps of the method for monitoring road data described above may be performed when the computer program is loaded into the RAM 503 and executed by the computing unit 501. Alternatively, in other embodiments, the computing unit 501 may be configured to perform the method for monitoring road data by any other appropriate means (for example, by means of firmware).

Various implementations of the systems and technologies disclosed herein can be realized in a digital electronic circuit system, an integrated circuit system, a field programmable gate array (FPGA), an application-specific integrated circuit (ASIC), an application-specific standard product (ASSP), a system on chip (SOC), a complex programmable logic device (CPLD), computer hardware, firmware, software, and/or combinations thereof. Such implementations may include implementation in one or more computer programs that are executable and/or interpretable on a programmable system including at least one programmable processor, which can be special or general purpose, configured to receive data and instructions from a storage system, at least one input apparatus, and at least one output apparatus, and to transmit data and instructions to the storage system, the at least one input apparatus, and the at least one output apparatus.

Program codes configured to implement the methods in the present disclosure may be written in any combination of one or more programming languages. Such program codes may be supplied to a processor or controller of a general-purpose computer, a special-purpose computer, or another programmable data processing apparatus to enable the function/operation specified in the flowchart and/or block diagram to be implemented when the program codes are executed by the processor or controller. The program codes may be executed entirely on a machine, partially on a machine, partially on a machine and partially on a remote machine as a standalone package, or entirely on a remote machine or a server.

In the context of the present disclosure, machine-readable media may be tangible media which may include or store programs for use by or in conjunction with an instruction execution system, apparatus or device. The machine-readable media may be machine-readable signal media or machine-readable storage media. The machine-readable media may include, but are not limited to, electronic, magnetic, optical, electromagnetic, infrared, or semiconductor systems, apparatuses or devices, or any suitable combinations thereof. More specific examples of machine-readable storage media may include electrical connections based on one or more wires, a portable computer disk, a hard disk, an RAM, an ROM, an erasable programmable read only memory (EPROM or flash memory), an optical fiber, a compact disk read only memory (CD-ROM), an optical storage device, a magnetic storage device, or any suitable combination thereof.

To provide interaction with a user, the systems and technologies described here can be implemented on a computer. The computer has: a display apparatus (e.g., a cathode-ray tube (CRT) or a liquid crystal display (LCD) monitor) for displaying information to the user; and a keyboard and a pointing apparatus (e.g., a mouse or trackball) through which the user may provide input for the computer. Other kinds of apparatuses may also be configured to provide interaction with the user. For example, a feedback provided for the user may be any form of sensory feedback (e.g., visual, auditory, or tactile feedback); and input from the user may be received in any form (including sound input, speech input, or tactile input).

The systems and technologies described herein can be implemented in a computing system including background components (e.g., as a data server), or a computing system including middleware components (e.g., an application server), or a computing system including front-end components (e.g., a user computer with a graphical user interface or web browser through which the user can interact with the implementation mode of the systems and technologies described here), or a computing system including any combination of such background components, middleware components or front-end components. The components of the system can be connected to each other through any form or medium of digital data communication (e.g., a communication network). Examples of the communication network include: a local area network (LAN), a wide area network (WAN) and the Internet.

The computer system may include a client and a server. The client and the server are generally far away from each other and generally interact via the communication network. A relationship between the client and the server is generated through computer programs that run on a corresponding computer and have a client-server relationship with each other. The server may be a cloud server, a distributed system server, or a server combined with blockchain.

It should be understood that the steps can be reordered, added, or deleted using the various forms of processes shown above. For example, the steps described in the present disclosure may be executed in parallel or sequentially or in different sequences, provided that desired results of the technical solutions disclosed in the present disclosure are achieved, which is not limited herein.

The above specific implementations do not limit the protection scope of the present disclosure. Those skilled in the art should understand that various modifications, combinations, sub-combinations, and replacements can be made according to design requirements and other factors. Any modifications, equivalent substitutions and improvements made within the spirit and principle of the present disclosure all should be included in the protection scope of the present disclosure.

## Claims

1. A method for monitoring road data, wherein the method comprises:

   acquiring (S101) a feature expression of a road;
   predicting (S102), according to the feature expression of the road and a pre-trained change prediction model, a probability that road data of the road will change; and
   collecting (S103) the road data of the road based on the probability that the road data will change.

2. The method according to claim 1, wherein the step of acquiring a feature expression of a road comprises: acquiring a static feature expression of the road, and/or acquiring a dynamic feature expression of the road.

3. The method according to claim 2, wherein the step of acquiring a static feature expression of the road comprises:
   acquiring at least one of a construction type of the road, a construction duration of the road, a construction-affecting range of the road and basic attributes of the road.

4. The method according to claim 2, wherein the step of acquiring a dynamic feature expression of the road comprises:
   acquiring at least one of a construction end duration of the road, known guidance data of the road, trajectory features of the road and real-time guidance data of the road.

5. The method according to any one of claims 1 to 4, wherein the step of collecting the road data of the road based on the probability that the road data of the road will change comprises:

adjusting a sampling cycle of the road based on the probability that the road data of the road will change; and

collecting the road data of the road based on the adjusted sampling cycle of the road.

6. The method according to any one of claims 1 to 5, wherein the method further comprises:

detecting, based on the collected road data of the road and road data of the road stored in a basic road database, whether the basic road database is required to be updated; and

updating the basic road database by using the road data of the road if the basic road database is required to be updated.

7. An apparatus (300) for monitoring road data, wherein the apparatus comprises:

an acquisition module (301) configured to acquire a feature expression of a road;

a prediction module (302) configured to predict, according to the feature expression of the road and a pre-trained change prediction model, a probability that road data of the road will change; and

a collection module (303) configured to collect the road data of the road based on the probability that the road data will change.

8. The apparatus (300) according to claim 7, wherein the acquisition module (301) is configured to:

acquire a static feature expression of the road, and/or acquire a dynamic feature expression of the road.

9. The apparatus (300) according to claim 8, wherein the acquisition module (301) is configured to:

acquire at least one of a construction type of the road, a construction duration of the road, a construction-affecting range of the road and basic attributes of the road.

10. The apparatus (300) according to claim 8, wherein the acquisition module (301) is configured to:

acquire at least one of a construction end duration of the road, known guidance data of the road, trajectory features of the road and real-time guidance data of the road.

11. The apparatus (300) according to any one of claims 7 to 10, wherein the collection module (303) comprises:

an adjustment unit (3031) configured to adjust a sampling cycle of the road based on the probability that the road data of the road will change;

and

a collection unit (3032) configured to collect the road data of the road based on the adjusted sampling cycle of the road.

12. The apparatus (300) according to any one of claims 7 to 11, wherein the apparatus further comprises:

a detection module (304) configured to detect, based on the collected road data of the road and road data of the road stored in a basic road database, whether the basic road database is required to be updated; and

an update module (305) configured to update the basic road database by using the road data of the road if the basic road database is required to be updated.

13. An electronic device, comprising:

at least one processor; and

a memory in communication connection with the at least one processor; wherein

the memory stores instructions executable by the at least one processor, and the instructions are executed by the at least one processor to enable the at least one processor to perform the method according to any one of claims 1 to 6.

14. A non-transitory computer-readable storage medium storing computer instructions, wherein the computer instructions are configured to cause a computer to perform the method according to any one of claims 1 to 6.

15. A computer program product, comprising a computer program, wherein, when the computer program is executed by a processor, the method according to any one of claims 1 to 6 is performed.

S101

Acquire a feature expression of a road

S102

Predict, according to the feature expression of the road
and a pre-trained change prediction model, a probability
that road data of the road will change

S103

Collect the road data of the road based on the probability
that the road data will change

FIG.1

S201

Acquire a static feature expression of the road, and/or acquire a dynamic feature expression of the road

S202

Predict, according to the static feature expression of the road, the dynamic feature expression of the road and a pre-trained change prediction model, a probability that road data of the road will change

S203

Adjust a sampling cycle of the road based on the probability that the road data will change

S204

Collect the road data of the road based on the adjusted sampling cycle of the road

S205

Detect, based on collected road data of the road and road data of road stored in a basic road database, whether basic road database is required to be updated?

No → Perform no operation, and the process ends

Yes

S206

Update the basic database by using the collected road data of the road

FIG.2

_300

Apparatus for monitoring road data

_301

Acquisition module

_302

Prediction module

_303

Collection module

FIG.3

300

Apparatus for monitoring road data

301

Acquisition module

302

Prediction module

303

3031

Adjustment unit

3032

Collection unit

Collection module

304

Detection module

305

Update module

FIG.4

FIG.5

Europäisches
Patentamt

European
Patent Office

Office européen
des brevets

# EUROPEAN SEARCH REPORT

Application Number

EP 22 16 6939

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/009141 A1 (NEO NETHERLANDS GEOMATICS & EARTH OBSERVATION B V [NL]) 21 January 2021 (2021-01-21) * page 1, lines 13-14; figures 1,5A,5B,8A,8B * | 1,2,7,8, 13-15 | INV. G01C21/00 |
| X | US 2020/111349 A1 (MUBAREK OMER [US]) 9 April 2020 (2020-04-09) * paragraphs [0032], [0035], [0092], [0103], [0104], [0124]; claim 1; figures 14,16 * | 1,2,7,8, 13-15 | |
| X | EP 3 859 277 A1 (HERE GLOBAL BV [NL]) 4 August 2021 (2021-08-04) * paragraphs [0029] - [0043], [0051] - [0055]; figures 1, 5, 9, 10, 11 * | 1,2,5,7, 8,11, 13-15 | |

TECHNICAL FIELDS
SEARCHED       (IPC)

G06K
G06V
G08G
G01C

The present search report has been drawn up for all claims

| Place of search | Date of completion of the search | Examiner |
|---|---|---|
| The Hague | 5 October 2022 | de la Rosa Rivera, E |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................

& : member of the same patent family, corresponding
    document

EPO FORM 1503 03.82 (P04C01)

**EP 4 141 386 A1**

**ANNEX TO THE EUROPEAN SEARCH REPORT
ON EUROPEAN PATENT APPLICATION NO.**

EP 22 16 6939

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2022

| Patent document cited in search report | | Publication date | Patent family member(s) | | Publication date |
|---|---|---|---|---|---|
| WO 2021009141 | A1 | 21-01-2021 | EP | 3997616 A1 | 18-05-2022 |
| | | | US | 2022245936 A1 | 04-08-2022 |
| | | | WO | 2021009141 A1 | 21-01-2021 |
| US 2020111349 | A1 | 09-04-2020 | US | 2020111349 A1 | 09-04-2020 |
| | | | US | 2021256838 A1 | 19-08-2021 |
| EP 3859277 | A1 | 04-08-2021 | EP | 3859277 A1 | 04-08-2021 |
| | | | US | 2021241614 A1 | 05-08-2021 |

EPO FORM P0459

For more details about this annex : see Official Journal of the European Patent Office, No. 12/82